# EUROPEAN PATENT SPECIFICATION

(11) **EP 2 512 637 B1**
(45) Date of publication and mention of the grant of the patent: **18.01.2017**
(21) Application number: 10841475.6
(22) Date of filing: 10.12.2010
(51) Int. Cl.: B01D 53/64, B01D 53/02

(54) **MERCURY REMOVAL FROM CRACKED GAS**
QUECKSILBERENTFERNUNG AUS EINEM CRACKGAS
ÉLIMINATION DE MERCURE À PARTIR D'UN GAZ DE CRAQUAGE

(30) Priority: 15.12.2009 US 286437 P
(43) Date of publication of application: 24.10.2012
(73) Proprietor: UOP LLC, Des Plaines, Illinois 60017-5017 (US)
(72) Inventor: KANAZIREV, Vladislav I., Des Plaines, IL 60017-5017 (US); GORAWARA, Jayant K., Des Plaines, IL 60017-5017 (US)
(74) Representative: Boult Wade Tennant
(86) International application number: PCT/US2010/059804
(87) International publication number: WO 2011/081836

(56) References cited:
- WO-A1-2009/101429
- WO-A2-2008/021968
- JP-A- 2000 017 273
- KR-A- 20090 053 799
- US-A- 5 223 145
- US-A- 5 281 258
- US-A- 5 354 357
- US-A- 5 989 506
- US-B2- 7 476 365

## Description

### BACKGROUND OF THE INVENTION

This invention relates to a process for removal of mercury from hydrocarbon streams. More particularly, the invention relates to the removal of mercury from hydrocarbon streams that contain a large proportion of unsaturated hydrocarbons.

Elemental mercury and mercury compounds contaminate both crude oil derived hydrocarbon streams and natural gas. Due to the health effects of mercury and the adverse impact of mercury in causing corrosion of aluminum containing heat exchangers, it is important to remove mercury from hydrocarbon streams. Mercury amalgamates with aluminum, resulting in mechanical failure and leakage. In addition, mercury can poison some catalysts including hydrogenation catalysts in acetylene converters and converters of other unsaturated hydrocarbons. Since the level of mercury that can be tolerated is not established, it is desired to remove the mercury to a level where it can not be detected with the available analytical capability. This is a level below 1 part per trillion.

Many mercury removal technologies are available and their application is straightforward in the case of non-reactive feeds such as in saturated hydrocarbons and fractions.
US 5,354,357 describes removal of mercury from process streams.
US 5,223,145 describes removal of mercury from process streams.
WO 2008/021968 describes a process for removal of mercury from gas streams.

US 5,281,258 describes removal of mercury impurity from natural gas.

WO 2009/101429 describes absorbents suitable for removing mercury, arsenic or antimony from fluid streams.

However, the ethylene industry presents a challenge due to the production of highly reactive side products. Steam cracker furnaces crack saturated hydrocarbons and produce a large proportion of unsaturated hydrocarbons, mostly olefins but also some acetylene and its homologues. These unsaturated hydrocarbons can deactivate the solid adsorbent masses used for mercury removal due to hydrocarbon polymerization and coke formation. In addition, acetylenic hydrocarbons are known to form explosive acetylides in combination with copper and silver, which are commonly used as active ingredients in solid masses for mercury removal. Thus, special considerations must be taken to remove mercury from cracked gas streams or any other streams that contain or may contain acetylenic hydrocarbons.

While copper compounds such as copper oxides and sulfides have been used to remove trace quantities of mercury from certain hydrocarbons, the treatment of unsaturated hydrocarbons that may contain acetylenes has proven more difficult due to the potential formation of explosive acetylides. A solution for this problem has now been found.

### SUMMARY OF THE INVENTION

The invention is a process for removing mercury impurities according to claim 1. The invention provides for the removal of mercury from a gas stream that contains any amount of acetylide precursors including acetylene or acetylenic hydrocarbons. In particular, the invention provides for the total containment of mercury from cracked gas by combining the dehydration and mercury removal. The cracked gas is dehydrated with molecular sieves containing a layer of a regenerative mercury scavenger such as UOP's HgSiv regenerative mercury removal adsorbent. The water free and Hg-free cracked gas hydrocarbons are then separated in the separation section of the ethylene plant. A portion of a demethanizer overhead (DMO) is returned as a regenerant for the dehydration unit. Then the DMO regenerant leaving the dehydration unit is cooled and directed to one or more non-regenerative mercury removal beds which contain a composite CuS-alumina porous mass capable of removing mercury without forming explosive acetylides, or reducing the cupric sulfide to cuprous sulfide (a form inactive as a mercury scavenger and also more likely to produce explosive acetylides) or excessive aging. Since the level of mercury that is removed is small, a non-regenerative bed can be used for extended periods of time without the adsorbent being replaced.

### DETAILED DESCRIPTION OF THE INVENTION

The present invention can be used to treat hydrocarbons containing acetylene or acetylenic hydrocarbons. Typically, there may be 0.1% of such precursors in the hydrocarbons being treated. However, it is important to consider that any amount of acetylides can be a problem due to the possible accumulation over time. The hydrocarbon streams may be from cracked gas or stream cracking to make ethylene.

It was confirmed that a material produced by co-forming of porous basic Cu carbonate and alumina powders followed by thermal treatment of the formed composite beads and subsequent treatment with S to produce CuS-alumina composite, does not have a propensity to form copper acetylides upon treatment with acetylene. Therefore, this material is suited as a scavenger for mercury removal from cracked gas regenerant streams. This material is characterized as having large crystals produced by conodulizing. Furthermore, the CuS-alumina composite produced in the manner described above has a propensity to resist reduction of the CuS active phase by the hydrogen present in the regenerant which produces Cu₂S. The latter compound is not suited as a mercury scavenger. Lastly, the CuS-alumina composite resists deterioration since it does not promote the reaction of the reactive components of the regenerant with the material causing coking, residue deposition and pore blocking. These adverse factors could render a mercury scavenger ineffective in service.

The composite material used in the present invention comprises from 5 to 60 wt% CuS, preferably from 10 to 55 wt% CuS, more preferably from 20-45 wt% CuS, and most preferably 40 wt% CuS. In addition, preferably the composite material contains from 10 parts million to 2 wt% chloride ions and more preferably from 50 ppm to 1 wt% chloride ions.

An analysis of several different gas streams is shown in the following table for both the cracked gas and the regeneration gas. This analysis does not show the level for mercury and some other impurities.

**TABLE**

| | | | | | | Cylinder Gas | |
|---|---|---|---|---|---|---|---|
| Sample # | | 2 | 3 | 4 | AVG | mol-% | 5 |
| CRACKED GAS, mol-% | | | | | | | |
| Hydrogen | 17 | 25 | 30 | 19 | 23 | 25 | 25 |
| Carbon Monoxide | 0.18 | 0.13 | 0.12 | 0.19 | 0.2 | 0.2 | 0.11 |
| Methane | 28 | 25 | 16 | 27 | 24 | balance | 25 |
| Acetylene | 0.7 | 0.5 | 0.4 | 0.5 | 0.5 | 1 | 0.7 |
| Ethylene | 34 | 32 | 33 | 33 | 33 | 40 | 32 |
| Ethane | 6 | 8 | 15 | 6 | 9 | - | 10 |
| Propylene | 11 | 5 | 3 | 10 | 7 | - | 5 |
| sum | 96.88 | 95.63 | 97.52 | 95.69 | 96 | 100.0 | 97 |

| REGEN GAS, mol-% | | | | | | | |
|---|---|---|---|---|---|---|---|
| Hydrogen | 6 | 6 | 30 | 7 | 12 | 10 | 15 |
| Carbon Monoxide | 0.4 | 0.3 | 0.3 | 0.3 | 0.3 | 0.3 | - |
| Methane | 94 | 93 | 69 | 92 | 87 | balance | 76 |
| Acetylene | 0.01 | 0.01 | 0.01 | 0.01 | 0.01 | 0.01 | - |
| Ethylene | 0.3 | 0.2 | 0.6 | 0.5 | 0.4 | 0.4 | 7.5 |
| sum | 100.71 | 99.51 | 99.91 | 99.81 | 99.985 | 100.0 | 98.5 |

In order to test the copper sulfide adsorbent used in the present invention and determine whether it would react with acetylenes to form copper acetylides, the following experiment was conducted under severe conditions. As can be seen above, typically there was 0.5% acetylene in the cracked gas and 0.1% in the regeneration gas. In our experiments, the adsorbent was tested under 100% acetylene to simulate extreme conditions. A sample of copper sulfide adsorbent was ground to increase the surface area to be exposed to acetylene. The sample was then exposed to 100% acetylene at 1 atmosphere pressure and room temperature for 24 hours. The acetylene was then evacuated from the sample and purged with nitrogen gas. Infrared spectroscopy was then used to examine the sample for copper acetylides. If no copper acetylides were found, then the material as considered to be safe for use as an adsorbent. There was no sign of any exothermic process after 24 hour exposure of either whole beads or ground sulfided copper adsorbent. In addition, there was no sign of copper acetylide formation after 1 week of exposure of the sulfided copper adsorbent in dry acetylene at 40°C. In addition, in an accelerated test that was designed to simulate long term exposure of the adsorbent to acetylene, after 1 week there were still no signs of acetylides being formed.

## Claims

1. A process for removing mercury impurities from gaseous hydrocarbon streams comprising a mixture of saturated hydrocarbons and unsaturated hydrocarbons, wherein said hydrocarbons contain acetylene or acetylenic hydrocarbons; said process comprising:
a) providing a fluid stream containing elemental mercury;
b) passing said fluid stream into a regenerable fixed adsorption bed containing an adsorbent on which said mercury is preferentially adsorbed whereby mercury is adsorbed, a mercury mass transfer front is established and a purified product effluent is recovered;
c) terminating the flow into said regenerable bed prior to breakthrough of the mercury mass transfer front;
d) regenerating said regenerable bed by passing therethrough a purge desorbent whereby mercury is desorbed and removed from said bed in a regenerant effluent stream, wherein said purge desorbent is a portion of a demethanizer overhead stream from a separation section of an ethylene plant; and
e) passing said regenerant effluent stream into a nonregenerable fixed adsorbent bed comprising a composite comprising alumina and copper sulfide to remove mercury from said regenerant effluent stream.

2. The process of claim 1 wherein said unsaturated hydrocarbons fail to react with said copper sulfide to form acetylides.

3. The process of claim 1 wherein said composite comprises from 5 to 60 wt% CuS.

4. The process of claim 1 wherein said composite comprises from 10 to 55wt% CuS.

5. The process of claim 1 wherein said composite comprises from 20 to 45 wt% CuS.

6. The process of claim 1 wherein said composite comprises 40 wt% CuS.

7. The process of claim 1 wherein said composite comprises 10 parts per million to 2 wt% chloride ions.

8. The process of claim 1 wherein said composite comprises 20 parts per million to 1 wt% chloride ions.

## Patentansprüche

1. Verfahren zum Entfernen von Quecksilberverunreinigungen aus gasförmigen Kohlenwasserstoffströmen, die ein Gemisch aus gesättigten Kohlenwasserstoffen und ungesättigten Kohlenwasserstoffen enthalten, wobei die Kohlenwasserstoffe Acetylen oder acetylenische Kohlenwasserstoffe enthalten und wobei das Verfahren umfasst:
a) Bereitstellen eines Fluidstroms, der elementares Quecksilber enthält;
b) Leiten des Fluidstroms in ein regenerierbares Adsorptionsfestbett, das ein Adsorbens enthält, an dem Quecksilber bevorzugt adsorbiert, wodurch Quecksilber adsorbiert wird, eine Quecksilber-Stoffaustauschfront geschaffen wird und ein austretender Strom des gereinigten Produktes gewonnen wird;
c) Beenden des Zuflusses in das regenerierbare Bett vor dem Durchbruch der Quecksilber-Stoffaustauschfront;
d) Regenerieren des regenerierbaren Betts durch Hindurchleiten eines Spüldesorbens, wodurch Quecksilber desorbiert und aus dem Bett in einem austretenden Regeneratstrom entfernt wird, wobei es sich bei dem Spüldesorbens um einen Teil eines Kopfstroms einer Entmethanisierungsvorrichtung aus einer Trennsektion einer Ethylenanlage handelt; und
e) Leiten des austretenden Regeneratstroms in ein nicht regenerierbares Adsorptionsfestbett, das ein Verbundmaterial aus Aluminiumoxid und Kupfersulfid aufweist, um das Quecksilber aus dem austretenden Regeneratstrom zu entfernen.

2. Verfahren nach Anspruch 1, wobei die ungesättigten Kohlenwasserstoffe keine Acetylide mit dem Kupfersulfid bilden.

3. Verfahren nach Anspruch 1, wobei das Verbundmaterial 5 bis 60 Gew.-% CuS umfasst.

4. Verfahren nach Anspruch 1, wobei das Verbundmaterial 10 bis 55 Gew.-% CuS umfasst.

5. Verfahren nach Anspruch 1, wobei das Verbundmaterial 20 bis 45 Gew.-% CuS umfasst.

6. Verfahren nach Anspruch 1, wobei das Verbundmaterial 40 Gew.-% CuS umfasst.

7. Verfahren nach Anspruch 1, wobei das Verbundmaterial 10 ppm bis 2 Gew.-% Chloridionen aufweist.

8. Verfahren nach Anspruch 1, wobei das Verbundmaterial 20 ppm bis 1 Gew.-% Chloridionen aufweist.

## Revendications

1. Procédé pour enlever des impuretés de mercure à partir de flux d'hydrocarbures gazeux comportant un mélange d'hydrocarbures saturés et d'hydrocarbures insaturés, dans lequel lesdits hydrocarbures contiennent de l'acétylène ou des hydrocarbures acétyléniques ; ledit procédé comportant les étapes consistant à :
a) fournir un flux de fluide contenant du mercure élémentaire ;
b) faire passer ledit flux de fluide dans un lit d'adsorption fixe régénérable contenant un adsorbant sur lequel ledit mercure est de préférence adsorbé, de sorte que le mercure est adsorbé, un front de transfert de masse de mercure est établi et un effluent de produit purifié est récupéré ;
c) terminer l'écoulement dans ledit lit régénérable avant l'avancée du front de transfert de masse de mercure ;
d) régénérer ledit lit régénérable par passage à travers un désorbant de purge de sorte que le mercure soit désorbé et enlevé dudit lit dans un flux d'effluent de régénération, ledit désorbant de purge étant une partie d'un flux aérien de déméthaniseur provenant d'une section de séparation d'une installation d'éthylène ; et
e) faire passer ledit flux d'effluent de régénération dans un lit d'adsorbant fixe non régénérable comprenant un composite comprenant de l'alumine et du sulfure de cuivre pour enlever le mercure dudit flux d'effluent de régénération.

2. Procédé selon la revendication 1, dans lequel lesdits hydrocarbures insaturés ne réagissent pas avec ledit sulfure de cuivre pour former des acétylures.

3. Procédé selon la revendication 1, dans lequel ledit composite comporte de 5 à 60 % en poids de CuS.

4. Procédé selon la revendication 1, dans lequel ledit composite comporte de 10 à 55 % en poids de CuS.

5. Procédé selon la revendication 1, dans lequel ledit composite comporte de 5 à 60 % en poids de CuS.

6. Procédé selon la revendication 1, dans lequel ledit composite comporte 40 % en poids CuS.

7. Procédé selon la revendication 1, dans lequel ledit composite comporte 10 parties par million à 2 % en poids d'ions chlorure.

8. Procédé selon la revendication 1, dans lequel ledit composite comporte 20 parts par millions à 1 % en poids d'ions chlorure.
